# EUROPEAN PATENT SPECIFICATION

(11) **EP 3 764 693 B1**
(45) Date of publication and mention of the grant of the patent: **16.02.2022**
(21) Application number: 18910623.0
(22) Date of filing: 23.03.2018
(51) Int. Cl.: H04W 36/00, H04W 36/38

(54) **HANDOVER METHOD AND APPARATUS**
HANDOVER-VERFAHREN UND -VORRICHTUNG
PROCÉDÉ ET APPAREIL DE TRANSFERT

(43) Date of publication of application: 13.01.2021
(73) Proprietor: GUANGDONG OPPO MOBILE TELECOMMUNICATIONS CORP., LTD., Wusha, Chang'an Dongguan Guangdong 523860 (CN)
(72) Inventor: YANG, Ning, Dongguan, Guangdong 523860 (CN); LIU, Jianhua, Dongguan, Guangdong 523860 (CN)
(74) Representative: Manitz Finsterwald Patent- und Rechtsanwaltspartnerschaft mbB
(86) International application number: PCT/CN2018/080359
(87) International publication number: WO 2019/178874

(56) References cited:
- WO-A1-2017/181828
- CN-A- 104 219 722
- CN-A- 107 306 455
- ZTE CORPORATION ET AL: "Consideration on mobility for E-UTRA connected to 5GC", 3GPP DRAFT; R2-1710421CONSIDERATION ON MOBILITY FOR E-UTRA CONNECTED TO 5GC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG2, no. Prague, Czech; 20171009 - 20171013 8 October 2017 (2017-10-08), XP051342466, Retrieved from the Internet: URL:http://www.3gpp.org/ftp/Meetings_3GPP_ SYNC/RAN2/Docs/ [retrieved on 2017-10-08]
- HUAWEI ET AL: "DC based NR scheme for 0ms interruption handover", 3GPP DRAFT; R2-1802473 DC BASED NR SCHEME FOR 0MS INTERRUPTION HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Athens, Greece; 20180226 - 20180302 16 February 2018 (2018-02-16), XP051400151, Retrieved from the Internet: URL:http://www.3gpp.org/ftp/tsg%5Fran/WG2% 5FRL2/TSGR2%5F101/Docs/ [retrieved on 2018-02-16]
- QUALCOMM INCORPORATED: "NR 0ms Interruption HO", 3GPP DRAFT; R2-1803662_0MS_INTERRUPTION_HO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20180226 - 20180302 16 February 2018 (2018-02-16), XP051400685, Retrieved from the Internet: URL:http://www.3gpp.org/ftp/tsg%5Fran/WG2% 5FRL2/TSGR2%5F101/Docs/ [retrieved on 2018-02-16]
- Qualcomm Incorporated: "R2-1803662 NR Oms Interruption HO", 3GPP TSG-RAN WG2 Meeting #101, 2 March 2018 (2018-03-02), XP051400685,
- OPPO: "Discussion on DC-based Handover for NR", 3GPP TSG-RAN WG2#101 R2-1801783, 2 March 2018 (2018-03-02), pages 2-3, XP051398960,

## Description

### TECHNICAL FIELD

The disclosure relates to the field of wireless communications, and more particularly to a method and apparatus for handover.

### BACKGROUND

A Dual Connectivity (DC) technology can provide a data rate improvement scheme similar to carrier aggregation under non-ideal transmission conditions between base stations. Therefore, the technology has been supported in Long Term Evolution (LTE) system and 5th Generation (5G) mobile communication system. The DC technology can avoid requirements for delay and synchronization in a scheduling process of Media Access Control (MAC) layer, data is split and merged at Packet Data Convergence Protocol (PDCP) layer, and then user data streams are transmitted to a user through multiple base stations simultaneously, which contribute to an improvement in user performance and to overall throughput of users and handover delay.

On the other hand, an Inter-Radio Access Technology (Inter-RAT) handover refers to a handover between cells of different systems, such as handover from an LTE cell to a New Radio (NR) cell, handover from the NR cell to the LTE cell, etc. However, in the current Inter-RAT handover, there are problems such as large time delay and easy interruption. Moreover, there is no solution to support DC-based Inter-RAT handover.

ZTE CORPORATION ET AL: "Consideration on mobility for E-UTRA connected to 5GC", 3GPP DRAFT; R2-1710421, 3GPP, MOBILE COMPETENCE CENTRE; 650, ROUTE DES LUCIOLES; F-06921 SOPHIA-ANTIPOLIS CEDEX, vol. RAN WG2, no. Prague, Czech; 2017-10-08, discusses the mobility issue for E-UTRA connected to 5GC and presents a few proposals.

HUAWEI ET AL: "DC based NR scheme for 0ms interruption handover", 3GPP DRAFT; R2-1802473, 3GPP, MOBILE COMPETENCE CENTRE; 650, ROUTE DES LUCIOLES; F-06921 SOPHIA-ANTIPOLIS CEDEX, vol. RAN WG2, no. Athens, Greece; 2018-02-16, discusses the merits of DC based solution with details on how to reconfigure the SgNB to MgNB in order to achieve 0ms interruption and compares it with the other major options of the solutions for 0ms interruption mobility enhancements.

QUALCOMM INCORPORATED: "NR 0ms Interruption HO", 3GPP DRAFT; R2-1803662, 3GPP, MOBILE COMPETENCE CENTRE; 650, ROUTE DES LUCIOLES; F-06921 SOPHIA-ANTIPOLIS CEDEX, vol. RAN WG2, no. Athens, Greece; 2018-02-16, compares the enhanced 'make-before-break' HO solution and DC based handover solution to support 0ms interruption during NR handover. In addition, high level views on the applicability of these enhancements for LTE 0ms HO are also covered in the contribution.

WO 2017/181828 A1 discloses a method and device for a dual connection operation, and a computer storage medium. The method comprises: a master base station sending, to a secondary base station, a request message for identity exchange between the master base station and the secondary station; the master base station receiving a confirmation message from the secondary base station, and then sending a radio resource control protocol connection reconfiguration message to a UE, wherein the radio resource control protocol connection reconfiguration message carries instruction information about the identity exchange between the master base station and the secondary base station.

### SUMMARY

The present invention is set out in the appended set of claims. To solve the above technical problems, embodiments of the disclosure provide a method and apparatus for handover.

The method for handover is provided in claim 1.

In the embodiment of the disclosure, before the first base station adds the second base station as the SN in the DC network, the method further includes the following operation.

The first base station receives a first measurement report for triggering a handover event and a second measurement report for triggering an SN addition event from the terminal, and determines that the second base station needs to be added as the SN in the DC network and a handover from a source cell to a target cell is required to be performed according to the first measurement report and the second measurement report. A base station of the source cell is the first base station, and a base station of the target cell is the second base station.

In the embodiment of the disclosure, the handover request message carries the following information: a global cell identity of a target cell corresponding to the second base station, and second indication information. The second indication information is to indicate the role switching between the SN and the MN in the DC network.

In the embodiment of the disclosure, the role switching between the SN and the MN in the DC network includes the following operations.

Signaling Radio Bearers (SRBs) on the MN in the DC network are configured to the SN, to implement the role switching between the SN and the MN

A Master Cell Group (MCG) bearer in the DC network is configured to a Secondary Cell Group (SCG) bearer or a split bearer.

In the embodiment of the disclosure, a data recovery operation is performed in Packet Data Convergence Protocol (PDCP) layer during the role switching between the SN and the MN in the DC network.

In the embodiment of the disclosure, the role switching between the SN and the MN in the DC network is performed during a process of generating the UE context at the second core network through coordination between the first core network and the second core network.

In the embodiment of the disclosure, in a case that SN addition is accompanied by a change in a bearer type, the second base station performs the role switching after completing the change in the bearer configuration type in the SN addition operation.

In the embodiment of the disclosure, the handover command carries a second key corresponding to the second core network, to enable the terminal to decrypt a received second data based on the second key, and to decrypt a received first data based on a first key corresponding to the first core network.

In the embodiment of the disclosure, when the first base station receives the handover request acknowledgement message from the second core network, the second core network sends a UE context setup message to the second base station to enable the second base station to complete the UE context preparation.

In the embodiment of the disclosure, the method further includes the following operation.

The first base station receives a Radio Resource Control (RRC) release message from the second base station, and releases an RRC configuration at the first base station side.

The apparatus for handover is provided in claim 10.

In the embodiment of the disclosure, the apparatus further includes a second receiving unit.

The second receiving unit is configured to receive a first measurement report for triggering a handover event and a second measurement report for triggering an SN addition event from the terminal, and determine, according to the first measurement report and the second measurement report, that the second base station needs to be added as the SN in the DC network and a handover from a source cell to a target cell is required to be performed. A base station of the source cell is the first base station, and a base station of the target cell is the second base station.

In the embodiment of the disclosure, the handover request message carries the following information: a global cell identity of a target cell corresponding to the second base station, and second indication information. The second indication information is to indicate the role switching between the SN and the MN in the DC network.

In the technical solution of the embodiments of the disclosure, the first base station adds the second base station as the SN in the DC network, and the first base station is the MN in the DC network; the first base station sends the handover request message to the first core network, where the handover request message is used to instruct a role switching between the SN and the MN in the DC network, and to complete the UE context preparation on the second core network side; the first base station receives the handover request acknowledgement message from the second core network, and sends the handover command to the terminal, so that the terminal sends the handover complete message to the second base station. In this way, DC-based Inter-RAT handover is implemented, that is, DC-based HO is used to support Inter-RAT mobility management, which can shorten the interruption in the Inter-RAT handover and improve user service experience in the hybrid deployment scenario of 4G and 5G.

### BRIEF DESCRIPTION OF DWAWINGS

The accompanying drawings are described herein to provide a further understanding of the disclosure, and form a part of the disclosure. The schematic embodiments of the disclosure and description thereof are used to explain the disclosure, and do not intended to limit the disclosure. In the drawings:
FIG. 1 is a flowchart of LTE X2 handover.
FIG. 2 is a flowchart of NR Xn handover.
FIG. 3 is a first schematic flowchart of a method for handover according to an embodiment of the disclosure.
FIG. 4 is a second schematic flowchart of a method for handover according to an embodiment.
FIG. 5 is a schematic structural diagram of an apparatus for handover according to an embodiment.
FIG. 6 is a schematic structural diagram of a computer device according to an embodiment not being part of the invention.

### DETAILED DESCRIPTION

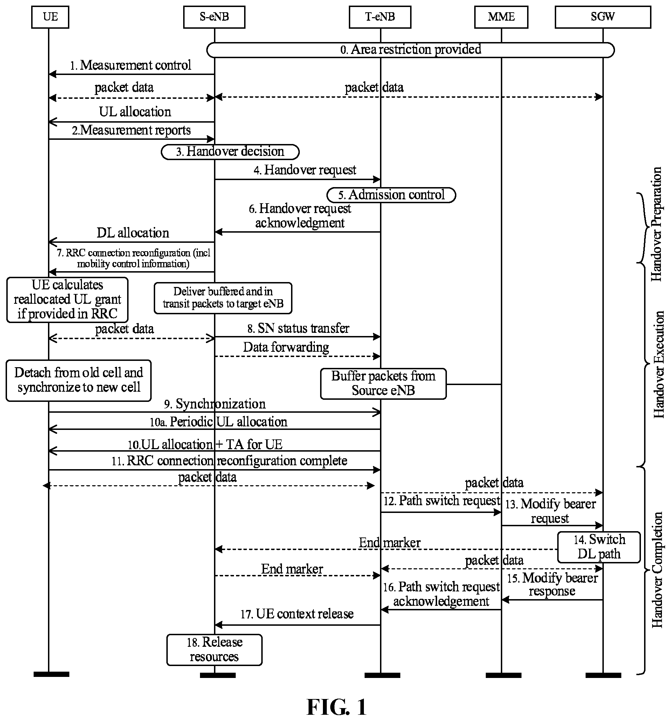

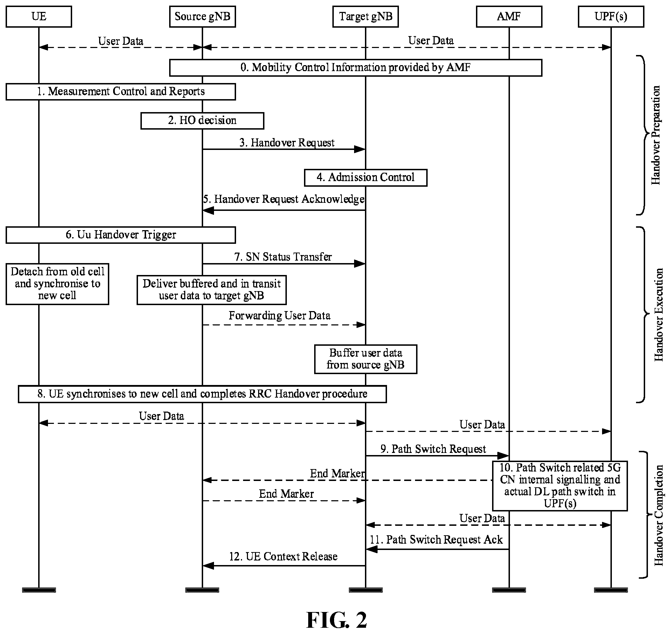

Abase station in LTE is called an eNodeB (eNB). In LTE, a procedure for handover from a source cell corresponding to a source base station (S-eNB, Source eNB) to a target cell corresponding to a target base station (T-eNB, Target eNB) is shown in FIG. 1. A base station in NR is called a gNB. In NR, a procedure for handover from a source cell corresponding to a source base station (S-gNB, Source gNB) to a target cell corresponding to a target base station (T-gNB, Target gNB) is shown in FIG. 2.

The first version of 5G supports Inter-RAT DC architecture, allowing MN and SN in dual connectivity to belong to different RATs. The DC technology can support a terminal to maintain connection with a base station through two legs. Therefore, the DC technology can also be used to support handover. Specifically, during the handover process, 1) the target cell is added as a secondary cell; 2) the secondary cell is configured as a primary cell through a role change, and then the current secondary cell is removed to complete the handover process with a minimum data interruption.

Note that the technical solutions in the embodiments of the disclosure are not limited to a DC-based Inter-RAT handover, but can also be applied to a DC-based Intra-RAT handover, for example, handover from an NR cell to an NR cell, or handover from an LTE cell to an LTE cell.

The implementation of the technical solutions of the disclosure will be further described in detail with reference to the specific embodiments below. In the following, a first base station refers to the source base station, a second base station refers to the target base station, a cell corresponding to the first base station is called a source cell, a cell corresponding to the second base station is called a target cell, a first core network corresponding to the first base station is called a source core network, and a second core network corresponding to the second base station is called a target core network. In addition, the DC network includes MN and SN, where the cell corresponding to the MN is also called a primary cell, and the cell corresponding to the SN is also called a secondary cell.

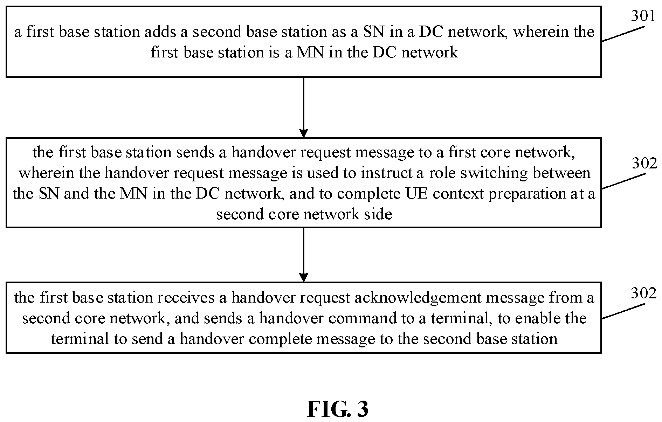

FIG. 3 is a schematic flowchart of a method for handover according to an embodiment of the disclosure. As shown in FIG. 3, the method for handover includes the following operations.

At block 301, a first base station adds a second base station as an SN in a DC network. The first base station is an MN in the DC network.

In the embodiment of the disclosure, before the first base station adds the second base station as the SN in the DC network, the method further includes: how to trigger a DC-based Intra-RAT handover (it should be understood that the handover process may be but not limited to the Intra-RAT handover).

The first base station receives a first measurement report for triggering a handover event and a second measurement report for triggering an SN addition event from a terminal, and determines to execute the operation of adding the second base station as the SN in the DC network and the operation of handover from a source cell to a target cell according to the first and second measurement reports. A base station of the source cell is the first base station, and a base station of the target cell is the second base station.

In an implementation, in response to determining that a signal quality of the target cell is higher than a first threshold (that is, B 1 event) according to the measurement report, the first base station determines that a handover from the source cell to the target cell is required to be performed.

In the embodiment of the disclosure, the SN added in the DC network should be able to support standalone operation. Otherwise, the cell corresponding to the newly added SN cannot be configured as a new primary cell, and then the DC-based Inter-RAT handover cannot be performed. Based on this, whether the target base station is standalone or non-standalone is indicated in the following manners.

In a first manner, the measurement report carries first indication information, and the first indication information is to indicate whether the second base station is standalone or non-standalone. When the first indication information indicates that the second base station is standalone, the first base station sends a handover request message to a first core network.

In a second manner, the first base station receives second indication information from the second base station, and the second indication information is to indicate whether the second base station is standalone or non-standalone. When the second indication information indicates that the second base station is standalone, the first base station sends a handover request message to the first core network.

At block 302, the first base station sends a handover request message to the first core network. The handover request message is used to instruct a role switching between the SN and the MN in the DC network, and to complete UE context preparation at a second core network side.

In the embodiment of the disclosure, the handover request message carries the following information: a global cell identity of the target cell corresponding to the second base station, and third indication information. The third indication information is to indicate a role switching between the SN and the MN in the DC network.

Here, the operation of performing role switching between the SN and the MN in the DC network includes the following actions.

SRBs on the MN in the DC network are configured to the SN to implement the role switching between the SN and the MN. That is, an RRC configuration needs to be switched.

Further, an MCG bearer in the DC network is configured to an SCG bearer or a split bearer.

In an implementation, in order to avoid an interruption, during the role switching between the SN and the MN in the DC network, the PDCP layer performs a data recovery operation.

In an implementation, in order to shorten an interruption during a change in bearer type after receiving a handover command, during a process of generating a UE context at the second core network through coordination between the first core network and the second core network, the roles of the SN and the MN in the DC network are switched.

In an implementation, if SN addition is accompanied by a change in the bearer type, the second base station performs the role switching after completing the change in the bearer configuration type in the SN addition operation.

At block 303, the first base station receives a handover request acknowledgement message from the second core network, and sends a handover command to the terminal, to enable the terminal to send a handover complete message to the second base station.

Specifically, the second core network sends the handover request acknowledgement message to the second base station, and the second base station sends the handover request acknowledgement message to the first base station. Here, the handover request acknowledgement message carries a second key corresponding to the second core network, and the second key corresponding to the second core network is carried in the handover command sent from the first base station to the terminal, so as to enable the terminal to decrypt a received second data based on the second key, and to decrypt a received first data based on a first key corresponding to the first core network. That is, there are two sets of keys at the terminal side.

In the embodiment of the disclosure, when the first base station receives the handover request acknowledgement message from the second core network, the second core network sends a UE context setup message to the second base station, to enable the base station to complete the preparation for the UE context.

After the above process is completed, if the first base station is removed in the DC network, a SCG bearer or split bearer in the DC network is configured to an MCG bearer. Thus, the process of handover from the first base station to the second base station based on DC is completed.

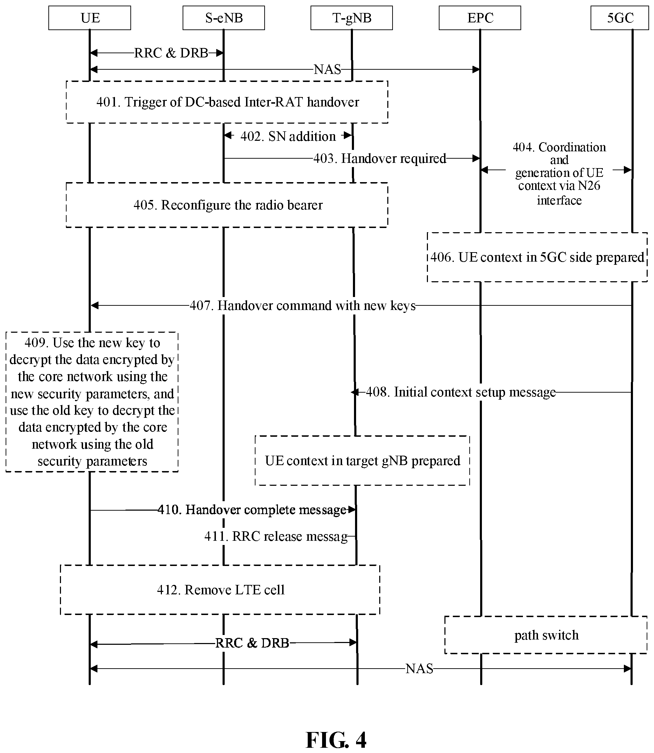

FIG. 4 is a second schematic flowchart of a method for handover according to an embodiment. In this embodiment, the process of handover from LTE to 5G is implemented. The first base station is an S-eNB, and the second base station is a T-gNB. The first core network is Evolved Packet Core (EPC) network, and the second core network is 5G Core (5GC) network. It should be understood that the process of handover from 5G to LTE is similar to the process of handover from LTE to 5G, and the process shown in FIG. 4 can be used to implement the handover. The method for handover includes the following operations.

At operation 401, DC-based Inter-RAT handover is triggered.

The current Inter-RAT handover is triggered by B2 event, and an addition of SN in an Evolved-UMTS Terrestrial Radio Access (EUTRA)-NR DC (EN-DC) is triggered by the MN or the SN (A4 event). It can be seen that the DC-based Inter-RAT handover needs to combine a measurement event corresponding to the Inter-RAT handover with a SN addition event to make comprehensive decisions.

However, Inter-RAT handover triggered by B2 event requires the signal quality of the serving cell to be below a certain threshold and the signal quality of the neighboring cell to be above a certain threshold. If the B2 event is used for triggering DC-based inter-RAT handover, there may be a situation where the source cell cannot be accessed soon, resulting in inability to configure the DC network. For the DC-based Inter-RAT handover, the B1 event may be more appropriate because the B1 event does not require the signal quality of the serving cell to be below a certain threshold.

At operation 402, SN is added.
a) A base station of a target cell (that is, T-gNB) is added as the SN, but SCG bearer configuration may not be performed immediately.
b) The added SN should be able to support standalone operation; otherwise, a cell corresponding to the newly added SN cannot be configured as a new primary cell, resulting in the inability to perform the DC-based Inter-RAT handover.

Further, there are two manners to indicate whether the newly added SN is standalone or non-standalone.

In the first manner, the UE indicates in a measurement report whether a measured target cell is standalone or non-standalone (it can also be said whether it is non-standalone (NSA) or not). If the standalone operation is not supported, the DC-based Inter-RAT handover cannot be performed, but the SN can be added. Whether the target cell is standalone or non-standalone is indicated in the measurement report, which enhances Automatic Neighbor Relationship (ANR) function to determine whether the target cell is standalone or non-standalone.

In the second manner, the SN feeds a message back to the MN to inform the source base station whether the second base station is standalone or non-standalone. If the standalone operation is not supported, after the SN is added, the source base station will not initiate a handover request message to the core network.

At operation 403, a handover is initiated.

The S-eNB sends a handover request message to the EPC. The purpose of handover is to configure a secondary cell in the DC network as a primary cell. Therefore, compared with a traditional handover request message, the handover request message needs to carry a global cell ID (global cell id) of the secondary cell corresponding to the SN and indication information for configuring the secondary cell as the primary cell.

At operation 404, a UE context at a target core network is generated by coordination between core networks through N26 interface.

For example, the UE context at the 5GC network side is generated, including a security parameter.

At operation 405, during the process of generating the UE context in the network side at operation 404, a RAN side (that is, an air interface side) can reconfigure a radio bearer. For example, the RAN side can configure the bearer from an MCG bearer to an SCG bearer or a split bearer or an SN-terminated MCG bearer. This configuration can configure the SN as an MN

Further, there may be an interruption during the execution of this operation, and an impact of the interruption on data transmission may be reduced through a data recovery mechanism on the PDCP layer.

Further, this operation may be performed in advance, which is beneficial to shorten the interruption when the bearer type is changed after receiving the handover command. In an embodiment not being part of the invention, this operation and the signaling in the core network side may be parallel in time.

At operation 406, the 5GC side completes preparation of the UE context.

Specifically, a core network entity (such as Mobility Management Entity (MME) or Access and Mobility Management Function (AMF)) generates the corresponding UE context. For the handover between EPC and 5GC with N26, a target core network element is actually ready for handover. It should be noted that in order to ensure that the interruption can be shortened after the terminal receives the handover command, the UE needs to be configured with a key of the target core network in the handover command.

At operation 407, the 5GC sends a handover command carrying a new key to the UE.

Here, the handover command is sent by the target core network element to the UE via the RAN, and carries the new key. This key can be used to decrypt data transmitted through a new bearer.

At operation 408, the 5GC sends an initial context setup message to the T-gNB.

While the target core network sends the handover command, the target core network element will send an initial context setup message to the T-gNB, thereby configuring the T-gNB as a gNB that supports a primary cell function.

In an implementation, if the SN addition is accompanied by a change in the bearer type, the target base station T-gNB (that is, the current SN in the DC network) performs the role switching operation after the change in the bearer configuration type in the SN addition operation is completed.

At operation 409, the UE uses the new key to decrypt data encrypted by the core network using a new security parameter, and uses an old key to decrypt data encrypted by the core network using an old security parameter.

Here, the UE has two sets of keys.

At operation 410, the UE sends a handover complete message to the T-gNB.

At operation 411, the T-gNB sends an RRC release message to the S-eNB, instructing to release an original configuration of SRB1 and SRB2.

At operation 412, the LTE cell is removed.

According to the signal quality of the old LTE cell and requirements of the terminal on energy consumption and DC configuration, the old LTE cell may be removed. Further, if the old LTE cell is removed, the RAN side reconfigures the radio bearer. For example, the RAN side may configure the SCG bearer or the split bearer to an MCG bearer.

It should be noted that an order for executing the above operations 409-412 is not limited.

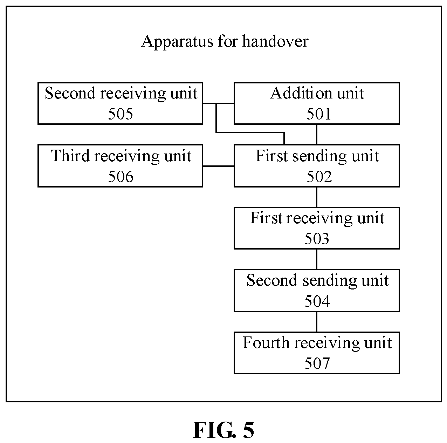

FIG. 5 is a schematic structural diagram of an apparatus for handover according to an embodiment. As shown in FIG. 5, the apparatus for handover includes an addition unit 501, a first sending unit 502, a first receiving unit 503 and a second sending unit 504.

The addition unit 501 is configured to add a second base station as an SN in a DC network. The first base station is an MN in the DC network.

The first sending unit 502 is configured to send a handover request message to a first core network. The handover request message is used to instruct a role switching between the SN and MN in the DC network, and to complete UE context preparation at a second core network side.

The first receiving unit 503 is configured to receive a handover request acknowledgement message from the second core network.

The second sending unit 504 is configured to send a handover command to a terminal, to enable the terminal to send a handover complete message to the second base station.

In an implementation, the apparatus further includes a second receiving unit 505.

The second receiving unit 505 is configured to receive a first measurement report for triggering a handover event and a second measurement report for triggering an SN addition event from the terminal, and determine that the second base station needs to be added as the SN in the DC network and handover from a source cell to a target cell is required to be performed according to the first measurement report and the second measurement report. A base station of the source cell is the first base station, and a base station of the target cell is the second base station.

In an implementation, the first measurement report for triggering the handover event refers to the following.

When a signal quality of the target cell is higher than a first threshold, it is determined that the handover from the source cell to the target cell is required to be performed.

In an implementation, the measurement report carries first indication information, and the first indication information is to indicate whether the second base station is standalone or non-standalone.

When the first indication information indicates that the second base station is standalone, the first sending unit 502 sends a handover request message to the first core network.

In an implementation, the apparatus further includes a third receiving unit 506.

The third receiving unit 506 is configured to receive second indication information from the second base station, and the second indication information is to indicate whether the second base station is standalone or non-standalone.

When the second indication information indicates that the second base station is standalone, the first sending unit 502 sends a handover request message to the first core network.

In an implementation, the handover request message carries the following information: a global cell identity of the target cell corresponding to the second base station, and third indication information. The third indication information is to indicate the role switching between the SN and the MN in the DC network.

In an implementation, the operation of performing role switching between the SN and the MN in the DC network includes the following actions.

SRBs on the MN in the DC network are configured to the SN to implement the role switching between the SN and the MN

An MCG bearer in the DC network is configured to an SCG bearer or a split bearer.

In an implementation, during the role switching between the SN and the MN in the DC network, the PDCP layer performs a data recovery operation.

In an implementation, during a process of generating the UE context at the second core network through coordination between the first core network and the second core network, the roles of the SN and the MN in the DC network are switched.

In an implementation, if the SN addition is accompanied by a change in a bearer type, the second base station performs the role switching after completing the change in the bearer configuration type in the SN addition operation.

In an implementation, the handover command carries a second key corresponding to the second core network, to enable the terminal to decrypt a received second data based on the second key, and to decrypt a received first data based on a first key corresponding to the first core network.

In an implementation, when the first base station receives the handover request acknowledgement message from the second core network, the second core network sends a UE context setup message to the second base station, to enable the second base station to complete the UE context preparation.

In an implementation, the apparatus further includes a fourth receiving unit 507.

The fourth receiving unit 507 is configured to receive an RRC release message from the second base station, and release an RRC configuration at the first base station side.

In an implementation, in response to removing the first base station in the DC network, a SCG bearer or split bearer in the DC network is configured to an MCG bearer.

Those skilled in the art will appreciate that functions implemented by each unit in the apparatus for handover shown in FIG. 5 may be understood with reference to related descriptions about the method for handover. The functions of each unit in the apparatus for handover shown in FIG. 5 may be implemented through a program running in a processor, and may also be implemented through a specific logical circuit.

When being implemented in form of software functional module and sold or used as an independent product, the apparatus for handover in the disclosure may also be stored in a computer-readable storage medium. Based on such an understanding, the technical solutions in the disclosure substantially or parts making contributions to the conventional art may be embodied in form of software product, and the computer software product is stored in a storage medium, including a plurality of instructions used to enable a computer device (which may be a personal computer, a server, a network device or the like) to execute all or part of the method of the disclosure. The storage medium includes: various media capable of storing program codes such as a U disk, a mobile hard disk, a Read Only Memory (ROM), a magnetic disk or an optical disk. Therefore, the disclosure is not limited to any specific hardware and software combination.

Correspondingly, the embodiments not being part of the invention also provide a computer storage medium having stored therein computer-executable instructions that, when being executed by a processor, cause the processor to implement the method for handover in the disclosure.

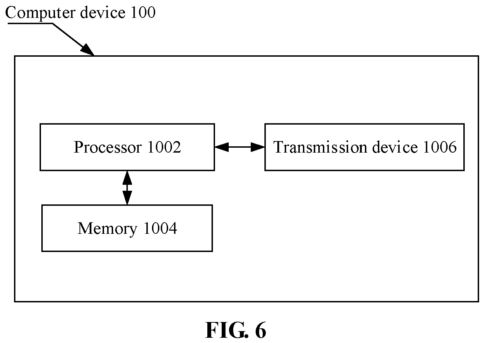

FIG. 6 is a structural schematic diagram of a computer device according to an embodiment not being part of the invention. The computer device may be a terminal, and may also be a network device. As shown in FIG. 6, the computer device 100 may include one or more (only one is illustrated in the figure) processors 1002 (the processor 1002 may include, but not limited to, a processing device such as a Micro Control Unit (MCU) or a Field Programmable Gate Array (FPGA)), a memory 1004 for storing data and a transmission device 1006 configured for a communication function. Those of ordinary skill in the art will appreciate that the structure shown in FIG. 6 is only schematic and not intended to limit the structure of the electronic device. For example, the computer device 100 may further include components more or fewer than the components shown in FIG. 6 or has a configuration different from that shown in FIG. 6.

The memory 1004 may be configured to store a software program of application software and a module, for example, a program instruction/module corresponding to a method of the disclosure. The processor 1002 runs the software program and module stored in the memory 1004, thereby executing various functional applications and data processing, namely implementing the above-mentioned method. The memory 1004 may include a high-speed random access memory and may also include a non-volatile memory, for example, one or more magnetic storage devices, flash memories or other non-volatile solid-state memories. In some examples, the memory 1004 may further include a memory arranged remotely relative to the processor 1002 and the remote memory may be connected to the computer device 100 through a network. An example of the network includes, but not limited to, the Internet, an intranet, a local area network, a mobile communication network or a combination thereof.

The transmission device 1006 is configured to receive or transmit data through a network. A specific example of the network may include a wireless network provided by a communication provider of the computer device 100. In an example, the transmission device 1006 includes a Network Interface Controller (NIC), which may be connected with another network device through a base station, thereby communicating with the Internet. In an example, the transmission device 1006 may be a Radio Frequency (RF) module, configured to communicate with the Internet in a wireless manner.

The technical solutions recited in the disclosure may be freely combined without conflicts.

In some examples provided by the disclosure, it is to be understood that the disclosed method and intelligent device may be implemented in another manner. The device described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part of all of the units may be selected according to a practical requirement to achieve the purposes of the solutions.

In addition, each functional unit in the disclosure may be integrated into a second processing unit, each unit may also serve as an independent unit and two or more than two units may also be integrated into a unit. The integrated unit may be implemented in a hardware form and may also be implemented in form of hardware and software functional unit.

Described above are only specific examples of the disclosure and not intended to limit the scope of protection of the disclosure given by the appended claims.

## Claims

1. A method for handover, comprising:
adding (301), by a first base station, a second base station as a Secondary Node, SN, in a Dual Connectivity, DC, network, wherein the first base station is a Master Node, MN, in the DC network;
receiving, by the first base station, first indication information from the second base station, wherein the first indication information is to indicate whether the second base station is standalone or non-standalone,
when the first indication information indicates that the second base station is standalone,
sending (302), by the first base station, a handover request message to a first core network, wherein the handover request message is used to instruct a role switching between the SN and the MN in the DC network, and to complete UE context preparation at an entity of a second core network; and
receiving (303), by the first base station, a handover request acknowledgement message from the second core network, and sending a handover command to a terminal, to enable the terminal to send a handover complete message to the second base station;
when the first indication information indicates that the second base station is non-standalone, sending no handover request message to the first core network.

2. The method of claim 1, further comprising:
before adding, by the first base station, the second base station as the SN in the DC network,
receiving, by the first base station, a first measurement report for triggering a handover event and a second measurement report for triggering an SN addition event from the terminal, and determining, according to the first measurement report and the second measurement report, that the second base station needs to be added as the SN in the DC network and a handover from a source cell to a target cell is required to be performed, wherein a base station of the source cell is the first base station, and a base station of the target cell is the second base station.

3. The method of claim 1 or 2, wherein the handover request message carries the following information: a global cell identity of a target cell corresponding to the second base station, and second indication information, wherein the second indication information is to indicate the role switching between the SN and the MN in the DC network.

4. The method of any one of claims 1 to 3, wherein the role switching between the SN and the MN in the DC network comprises:
configuring Signaling Radio Bearers, SRBs, on the MN in the DC network to the SN, to implement the role switching between the SN and the MN,
wherein a data recovery operation is performed in Packet Data Convergence Protocol, PDCP, layer during the role switching between the SN and the MN in the DC network.

5. The method of claim 4, wherein the role switching between the SN and the MN in the DC network is performed during a process of generating the UE context at the second core network through coordination between the first core network and the second core network.

6. The method of claim 4 or 5, wherein in a case that SN addition is accompanied by a change in a bearer type, the second base station performs the role switching after completing the change in a bearer configuration type in the SN addition operation.

7. The method of any one of claims 1 to 6, wherein the handover command carries a second key corresponding to the second core network, to enable the terminal to decrypt a received second data based on the second key, and to decrypt a received first data based on a first key corresponding to the first core network.

8. The method of any one of claims 1 to 7, wherein the second core network sends a UE context setup message to the second base station to enable the second base station to complete the UE context preparation when the first base station receives the handover request acknowledgement message from the second core network.

9. The method of any one of claims 1 to 8, further comprising:
receiving, by the first base station, a Radio Resource Control, RRC, release message from the second base station, and releasing an RRC configuration at the first base station side.

10. An apparatus for handover, comprising:
an addition unit (501), configured to add a second base station as a Secondary Node, SN, in a Dual Connectivity, DC, network, wherein the first base station is a Master Node, MN, in the DC network;
a first receiving unit (506), configured to receive first indication information from the second base station, wherein the first indication information is to indicate whether the second base station is standalone or non-standalone;
a first sending unit (502), configured to send a handover request message to a first core network when the first indication information indicates that the second base station is standalone, wherein the handover request message is used to instruct a role switching between the SN and MN in the DC network, and to complete UE context preparation at an entity of a second core network;
a second receiving unit (503), configured to receive a handover request acknowledgement message from the second core network; and
a second sending unit (504), configured to send a handover command to a terminal, to enable the terminal to send a handover complete message to the second base station;
wherein the first sending unit (502) is further configured to send no handover request message to the first core network when the first indication information indicates that the second base station is non-standalone.

11. The apparatus of claim 10, further comprising:
a third receiving unit (505), configured to receive a first measurement report for triggering a handover event and a second measurement report for triggering an SN addition event from the terminal, and determine, according to the first measurement report and the second measurement report, that the second base station needs to be added as the SN in the DC network and a handover from a source cell to a target cell is required to be performed, wherein a base station of the source cell is the first base station, and a base station of the target cell is the second base station.

12. The apparatus of claim 10 or 11, wherein the handover request message carries the following information: a global cell identity of a target cell corresponding to the second base station, and second indication information, wherein the second indication information is to indicate the role switching between the SN and the MN in the DC network.

## Patentansprüche

1. Verfahren zur Übergabe, umfassend:
Hinzufügen (301) einer zweiten Basisstation als sekundären Knoten, SN, in einem Netzwerk mit dualer Konnektivität, DC, durch eine erste Basisstation, wobei die erste Basisstation ein Master-Knoten, MN in dem DC-Netzwerk ist,
Empfangen erster Angabeinformationen von der zweiten Basisstation durch die erste Basisstation, wobei die ersten Angabeinformationen dazu dienen anzugeben, ob die zweite Basisstation eigenständig oder nicht eigenständig ist,
wenn die ersten Angabeinformationen angeben, dass die zweite Basisstation eigenständig ist,
Senden (302) einer Übergabeanfragenachricht an ein erstes Kernnetzwerk durch die erste Basisstation, wobei die Übergabeanfragenachricht verwendet wird, um einen Rollentausch zwischen dem SN und dem MN in dem DC-Netzwerk anzuweisen und eine UE-Kontextvorbereitung an einer Entität eines zweiten Kernnetzwerks abzuschließen, und
Empfangen (303) einer Übergabeanfrage-Bestätigungsnachricht von dem zweiten Kernnetzwerk durch die erste Basisstation und Senden eines Übergabebefehls an ein Endgerät, um das Endgerät in die Lage zu versetzen, eine Übergabe-Abschlussnachricht an die zweite Basisstation zu senden,
wenn die ersten Angabeinformationen angeben, dass die zweite Basisstation nicht eigenständig ist, Senden keiner Übergabeanfragenachricht an das erste Kernnetzwerk.

2. Verfahren nach Anspruch 1, ferner Folgendes umfassend:
vor dem Hinzufügen der zweiten Basisstation als den SN in dem DC-Netzwerk durch die erste Basisstation
Empfangen einer ersten Messmeldung zum Auslösen eines Übergabeereignisses und einer zweiten Messmeldung zum Auslösen eines SN-Hinzufügungsereignisses von dem Endgerät durch die erste Basisstation und Bestimmen gemäß der ersten Messmeldung und der zweiten Messmeldung, dass die zweite Basisstation als der SN in dem DC-Netzwerk hinzugefügt werden muss und eine Übergabe von einer Quellzelle zu einer Zielzelle durchgeführt werden muss, wobei eine Basisstation der Quellzelle die erste Basisstation ist und eine Basisstation der Zielzelle die zweite Basisstation ist.

3. Verfahren nach Anspruch 1 oder 2, wobei die Übergabeanfragenachricht die folgenden Informationen mitführt: eine globale Zellidentität einer Zielzelle, die der zweiten Basisstation entspricht, und zweite Angabeinformationen, wobei die zweiten Angabeinformationen dazu dienen, den Rollentausch zwischen dem SN und dem MN in dem DC-Netzwerk angeben.

4. Verfahren nach einem der Ansprüche 1 bis 3, wobei der Rollentausch zwischen dem SN und dem MN in dem DC-Netzwerk Folgendes umfasst:
Konfigurieren von Signalfunkträgern, SRB, an dem MN in dem DC-Netzwerk auf den SN, um den Rollentausch zwischen dem SN und dem MN zu implementieren,
wobei während des Rollentauschs zwischen dem SN und dem MN in dem DC-Netzwerk ein Datenwiederherstellungsvorgang im Layer des Packet Data Convergence Protocol, PDCP, durchgeführt wird.

5. Verfahren nach Anspruch 4, wobei der Rollentausch zwischen dem SN und dem MN in dem DC-Netzwerk während eines Prozesses des Erzeugens des UE-Kontextes in dem zweiten Kernnetzwerk durch Koordination zwischen dem ersten Kernnetzwerk und dem zweiten Kernnetzwerk durchgeführt wird.

6. Verfahren nach Anspruch 4 oder 5, wobei in dem Fall, dass die SN-Hinzufügung mit einer Änderung eines Trägertyps einhergeht, die zweite Basisstation den Rollentausch nach Abschluss der Änderung eines Trägerkonfigurationstyps in dem SN-Hinzufügungsvorgang durchführt.

7. Verfahren nach einem der Ansprüche 1 bis 6, wobei der Übergabebefehl einen zweiten Schlüssel mitführt, der dem zweiten Kernnetzwerk entspricht, um das Endgerät in die Lage zu versetzen, empfangene zweite Daten basierend auf dem zweiten Schlüssel zu entschlüsseln und empfangene erste Daten basierend auf einem ersten Schlüssel zu entschlüsseln, der dem ersten Kernnetzwerk entspricht.

8. Verfahren nach einem der Ansprüche 1 bis 7, wobei das zweite Kernnetzwerk eine UE-Kontexteinrichtungsnachricht an die zweite Basisstation sendet, um die zweite Basisstation in die Lage zu versetzen, die UE-Kontextvorbereitung abzuschließen, wenn die erste Basisstation die Übergabeanfrage-Bestätigungsnachricht von dem zweiten Kernnetzwerk empfängt.

9. Verfahren nach einem der Ansprüche 1 bis 8, ferner Folgendes umfassend:
Empfangen einer Funkressourcensteuerung-, RRC-, Freigabenachricht von der zweiten Basisstation durch die erste Basisstation und Freigeben einer RRC-Konfiguration auf der Seite der ersten Basisstation.

10. Vorrichtung zur Übergabe, umfassend:
eine Hinzufügungseinheit (501), die konfiguriert ist zum Hinzufügen einer zweiten Basisstation als sekundären Knoten, SN, in einem Netzwerk mit dualer Konnektivität, DC, wobei die erste Basisstation ein Master-Knoten, MN, in dem DC-Netzwerk ist,
eine erste Empfangseinheit (506), die konfiguriert ist zum Empfangen erster Angabeinformationen von der zweiten Basisstation, wobei die ersten Angabeinformationen dazu dienen anzugeben, ob die zweite Basisstation eigenständig oder nicht eigenständig ist,
eine erste Sendeinheit (502), die konfiguriert ist zum Senden einer Übergabeanfragenachricht an ein erstes Kernnetzwerk, wenn die ersten Angabeinformationen angeben, dass die zweite Basisstation eigenständig ist, wobei die Übergabeanfragenachricht verwendet wird, um einen Rollentausch zwischen dem SN und dem MN in dem DC-Netzwerk anzuweisen und eine UE-Kontextvorbereitung an einer Entität eines zweiten Kernnetzwerks abzuschließen,
eine zweite Empfangseinheit (503), die konfiguriert ist zum Empfangen einer Übergabeanfrage-Bestätigungsnachricht von dem zweiten Kernnetzwerk, und
eine zweite Sendeinheit (504), die konfiguriert ist zum Senden eines Übergabebefehls an ein Endgerät, um das Endgerät in die Lage zu versetzen, eine Übergabe-Abschlussnachricht an die zweite Basisstation zu senden,
wobei die erste Sendeinheit (502) ferner konfiguriert ist, keine Übergabeanfragenachricht an das erste Kernnetzwerk zu senden, wenn die ersten Angabeinformationen angeben, dass die zweite Basisstation nicht eigenständig ist.

11. Vorrichtung nach Anspruch 10, ferner Folgendes umfassend:
eine dritte Empfangseinheit (505), die konfiguriert ist zum Empfangen einer ersten Messmeldung zum Auslösen eines Übergabeereignisses und einer zweiten Messmeldung zum Auslösen eines SN-Hinzufügungsereignisses von dem Endgerät und Bestimmen gemäß der ersten Messmeldung und der zweiten Messmeldung, dass die zweite Basisstation als der SN in dem DC-Netzwerk hinzugefügt werden muss und eine Übergabe von einer Quellzelle zu einer Zielzelle durchgeführt werden muss, wobei eine Basisstation der Quellzelle die erste Basisstation ist und eine Basisstation der Zielzelle die zweite Basisstation ist.

12. Vorrichtung nach Anspruch 10 oder 11, wobei die Übergabeanfragenachricht die folgenden Informationen mitführt: eine globale Zellidentität einer Zielzelle, die der zweiten Basisstation entspricht, und zweite Angabeinformationen, wobei die zweiten Angabeinformationen dazu dienen, den Rollentausch zwischen dem SN und dem MN in dem DC-Netzwerk angeben.

## Revendications

1. Procédé de transfert comprenant :
l'ajout (301), par une première station de base, d'une seconde station de base en tant que nœud secondaire, SN, dans un réseau à double connectivité, DC, la première station de base étant un nœud maître, MN, dans le réseau DC ;
la réception, par la première station de base, de premières informations d'indication de la seconde station de base, les premières informations d'indication servant à indiquer que la seconde station de base est autonome ou non,
lorsque les premières informations d'indication indiquent que la seconde station de base est autonome,
l'envoi (302), par la première station de base, d'un message de demande de transfert à un premier réseau central, le message de demande de transfert servant à indiquer un basculement de rôle entre le SN et le MN dans le réseau DC et à terminer une préparation de contexte d'UE au niveau d'une entité d'un second réseau central ; et
la réception (303), par la première station de base, d'un message d'accusé de réception de demande de transfert à partir du second réseau central et l'envoi d'une commande de transfert à un terminal, afin de permettre au terminal d'envoyer un message de transfert terminé à la seconde station de base ;
lorsque les premières informations d'indication indiquent que la seconde station de base n'est pas autonome, l'envoi d'aucun message de demande de transfert au premier réseau central.

2. Procédé selon la revendication 1, comprenant en outre :
avant l'ajout, par la première station de base, de la seconde station de base en tant que SN dans le réseau DC,
la réception, par la première station de base, d'un premier rapport de mesure afin de déclencher un événement de transfert et d'un second rapport de mesure afin de déclencher un événement d'ajout de SN à partir du terminal, et la détermination, en fonction du premier rapport de mesure et du second rapport de mesure, que la seconde station de base doit être ajoutée en tant que SN dans le réseau DC et qu'un transfert d'une cellule source à une cellule cible doit être réalisé, une station de base de la cellule source étant la première station de base et une station de base de la cellule cible étant la seconde station de base.

3. Procédé selon la revendication 1 ou 2, dans lequel le message de demande de transfert comporte les informations suivantes : une identité de cellule globale d'une cellule cible correspondant à la seconde station de base, et des secondes informations d'indication, les secondes informations d'indication servant à indiquer le basculement de rôle entre le SN et le MN dans le réseau DC.

4. Procédé selon l'une quelconque des revendications 1 à 3, dans lequel le basculement de rôle entre le SN et le MN dans le réseau DC comprend :
la configuration de supports radio de signalisation, SRL, sur le MN du réseau DC vers le SN, pour mettre en œuvre le basculement de rôle entre le SN et le MN,
dans lequel une opération de récupération de données est réalisée dans une couche de protocole de convergence de données par paquets, PDCP, pendant le basculement de rôle entre le SN et le MN dans le réseau DC.

5. Procédé selon la revendication 4, dans lequel le basculement de rôle entre le SN et le MN dans le réseau DC est réalisé durant un processus de génération du contexte d'UE au niveau du second réseau central par coordination entre le premier réseau central et le second réseau central.

6. Procédé selon la revendication 4 ou 5, dans lequel dans le cas où un ajout de SN s'accompagne d'un changement de type de support, la seconde station de base réalise le basculement de rôle après avoir terminé le changement de type de configuration de support dans l'opération d'ajout de SN.

7. Procédé selon l'une quelconque des revendications 1 à 6, dans lequel la commande de transfert comporte une seconde clé correspondant au second réseau central, afin de permettre au terminal de décrypter des secondes données reçues relativement à la seconde clé, et de décrypter des premières données reçues relativement à une première clé correspondant au premier réseau central.

8. Procédé selon l'une quelconque des revendications 1 à 7, dans lequel le second réseau central envoie un message de configuration de contexte d'UE à la seconde station de base afin de permettre à la seconde station de base de terminer la préparation de contexte d'UE lorsque la première station de base reçoit le message d'accusé de réception de la demande de transfert à partir du second réseau central.

9. Procédé selon l'une quelconque des revendications 1 à 8, comprenant en outre ;
la réception, par la première station de base, d'un message de libération de commande de ressources radio, RRC, à partir de la seconde station de base et la libération d'une configuration de RRC au niveau de la première station de base.

10. Appareil de transfert, comprenant :
une unité d'ajout (501), configurée pour ajouter une seconde station de base en tant que nœud secondaire, SN, dans un réseau à double connectivité, DC, la première station de base étant un nœud maître, MN, dans le réseau DC ;
une première unité de réception (506), configurée pour recevoir des premières informations d'indication à partir de la seconde station de base, les premières informations d'indications servant à indiquer que la seconde station de base est autonome ou non ;
une première unité d'envoi (502), configurée pour envoyer un message de demande de transfert à un premier réseau central lorsque les premières informations d'indication indiquent que la seconde station de base est autonome, le message de demande de transfert servant à indiquer un basculement de rôle entre le SN et le MN dans le réseau DC et à terminer une préparation de contexte d'UE au niveau d'une entité d'un second réseau central ;
une seconde unité de réception (503), configurée pour recevoir un message d'accusé de réception de demande de transfert à partir du second réseau central ; et
une seconde unité d'envoi (504), configurée pour envoyer une commande de transfert à un terminal, afin de permettre au terminal d'envoyer un message de transfert terminé à la seconde station de base ;
dans lequel la première unité d'envoi (502) est en outre configurée pour n'envoyer aucun message de demande de transfert au premier réseau central lorsque les premières informations d'indication indiquent que la seconde station de base n'est pas autonome.

11. Appareil selon la revendication 10, comprenant en outre :
une troisième unité de réception (505), configurée pour recevoir à partir du terminal un premier rapport de mesure afin de déclencher un événement de transfert et un second rapport de mesure afin de déclencher un événement d'ajout de SN, et déterminer, en fonction du premier rapport de mesure et du second rapport de mesure, que la seconde station de base doit être ajoutée en tant que SN dans le réseau DC et qu'un transfert d'une cellule source à une cellule cible doit être réalisé, une station de base de la cellule source étant la première station de base et une station de base de la cellule cible étant la seconde station de base.

12. Appareil selon la revendication 10 ou 11, dans lequel le message de demande de transfert comporte les informations suivantes : une identité de cellule globale d'une cellule cible correspondant à la seconde station de base, et des secondes informations d'indication, les secondes informations d'indication servants à indiquer le basculement de rôle entre le SN et le MN dans le réseau DC.
